Europäisches Patentamt

European Patent Office

Office européen des brevets

(11) Publication number: **0 107 194**
**B1**

(12) **EUROPEAN PATENT SPECIFICATION**

(45) Date of publication of patent specification: **10.06.87**

(51) Int. Cl.⁴: **F 16 H 11/06, F 16 F 1/04**

(21) Application number: **83110544.0**

(22) Date of filing: **21.10.83**

(54) **Hydraulic control system for continuously variable V-belt transmission.**

(30) Priority: **22.10.82 JP 184623/82**

(43) Date of publication of application:
**02.05.84 Bulletin 84/18**

(45) Publication of the grant of the patent:
**10.06.87 Bulletin 87/24**

(84) Designated Contracting States:
**DE FR GB IT**

(56) References cited:
**EP-A-0 027 672**
**EP-A-0 061 732**
**EP-A-0 061 734**
**FR-A-1 045 367**
**FR-A-1 069 215**
**FR-A-2 065 790**
**GB-A-1 525 674**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Abo, Keiju**
**No. 3-68, Oppama-higashicho**
**Yokosuka City (JP)**
Inventor: **Yamamuro, Sigeaki**
**No. 3-11-41, Ikego**
**Zushi City (JP)**
Inventor: **Tanaka, Yoshikazu**
**No. 1486, Tomioka-cho Kanazawa-ku**
**Yokohama City (JP)**
Inventor: **Kumura, Haruyoshi**
**No. 2040-32, Kamikurata Totsuka-ku**
**Yokohama City (JP)**
Inventor: **Hirano, Hiroyuki**
**No. 3-68, Oppama-higashicho**
**Yokosuka City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a hydraulic control system for a continuously variable V-belt transmission.

A line pressure used in the continuously variable V-belt transmission should preferably be maintained at a minimum value required. If the line pressure is higher than this minimum value, the V-belt will be subject to a tension greater than necessary, shortening its life span and reducing its power transmission efficiency. Further, an oil pump has to discharge oil pressure higher than necessary, resulting in a loss of the pump.

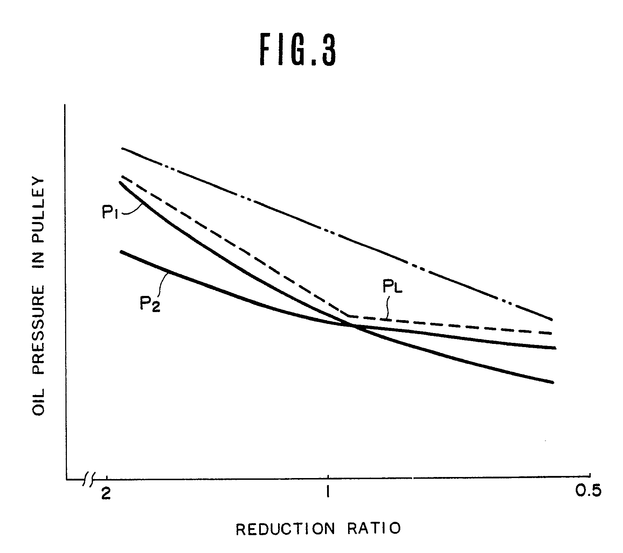

EP—A—0061734 comprising the features of the preamble of claim 1 discloses a hydraulic control system for a continuously variable V-belt transmission wherein a drive pulley has a larger pressure acting area therein than a pressure acting area in a driven pulley. A line pressure regulator valve used in this hydraulic control system generates a line pressure which varies linearly in proportion to an engine torque and also to a reduction ratio between the both pulleys. This line pressure approximates to the minimum value required over most of the operating range. But, it is still higher than necessary in certain operating range. Referring to Figure 3, this will be further described. As shown by the fully drawn curves shown in Figure 3, the minimum oil pressure P1 required by the drive pulley cylinder chamber is higher than the minimum oil pressure P2 required by the driven pulley cylinder chamber at reduction ratios larger than a certain reduction ratio near one and the former is lower than the latter at reduction ratios smaller than the certain reduction ratio. The line pressure according to the above EP—A—0061734 varies linearly as shown by the phantom line for the reduction ratio and thus becomes higher than necessary at reduction ratios near one. In order to provide the required minimum oil pressure over the whole reduction ratios, the line pressure should vary non-linearly as shown by the broken lines in Figure 3.

It is an object of the present invention to provide a hydraulic control system in accordance with the preamble of claim 1, wherein a more appropriate line pressure control is performed, approximating the actual oil pressure in the drive and driven pulley cylinder chambers as close as desirable over the whole range of varying transmission ratio to the required minimum oil pressure necessary in both the drive and driven pulley cylinder chambers for a reliable operation of the system.

To achieve the above mentioned object, the hydraulic control system incorporates the features according to the characterizing portion of claim 1.

Thus, the hydraulic control system comprises a valve spool preloading spring means having non-linear spring characteristics, so as to exert progressively increasing spring force to the valve spool when said spring means is compressed by a slideable sleeve, forming the movable member responsive to the reduction ratio, which retains the one end of said spring means, while said sleeve is engaged with a reduction ratio indicative pivotable lever, operatively attached to an axially movable portion of the variable transmission, said valve spool being movable at least in response to said spring force and a throttle pressure responsive oil pressure in the one direction, and the line pressure in the opposite direction thereof, effecting line pressure regulation so that line pressure progressively increases with the increase in reduction ratio of said variable transmission.

In other words, the sleeve axially movable relative to the valve spool in response to a changed reduction ratio of the transmission acts in varying the length of the spring means correspondingly, whereas the spring means biases the valve spool with a force which varies at a different rate in response to the length of the spring means being changed. The line pressure regulating valve spool is movable at least in response to the force exerted by the spring means and line pressure.

The features and advantages of the present invention will become more apparent from the following more particular description of preferred embodiments of the invention as illustrated in the accompanying drawings where:

Figure 1 is a diagrammatic view of a transmission mechanism of a continuously variable V-belt transmission;

Figure 2A and 2B, when combined, illustrate a hydraulic control system for the continuously variable V-belt transmission according to the present invention;

Figure 3 is a graph showing a minimum oil pressure required by a drive pulley (fully drawn curve P1), a minimum required oil pressure required by a driven pulley (fully drawn curve P2), the previously proposed line pressure (phantom line) discussed before, and the desired line pressure (broken line) also discussed above;

Figure 4 shows a line pressure versus reduction ratio characteristic provided by a line pressure regulator valve shown in Figure 2B;

Figures 5, 6 and 7 show another forms of springs which may replace two springs used in the pressure regulator valve shown in Figure 2B; and

Figure 8 shows a line pressure versus reduction ratio characteristic if any one of the springs shown in Figures 5, 6 and 7 is used.

Detailed description of the invention

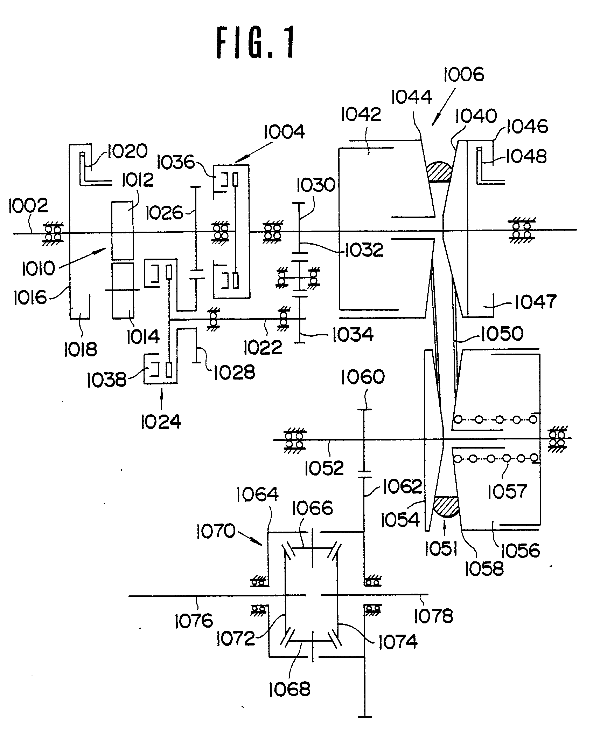

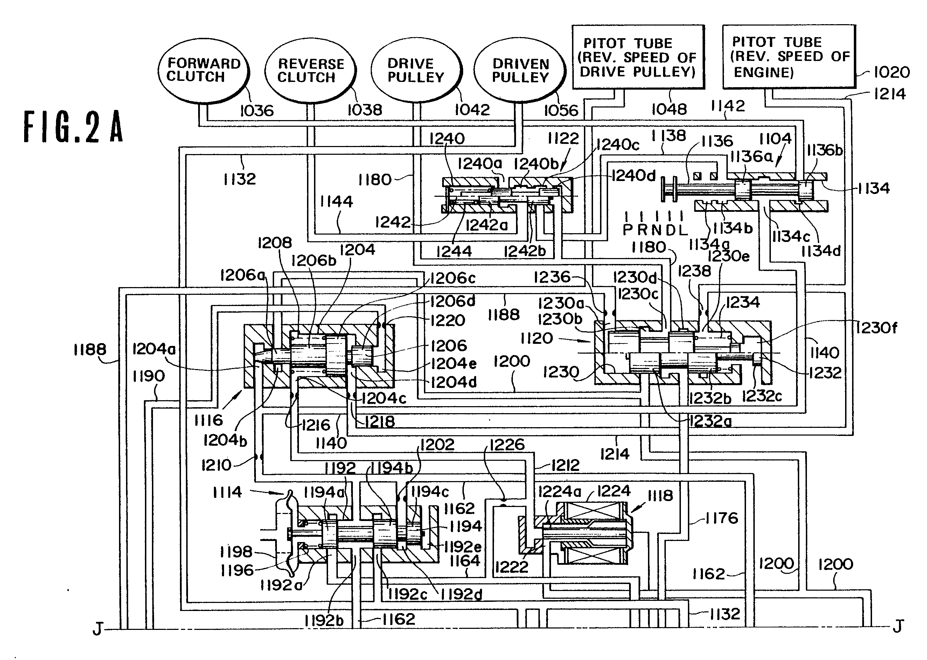

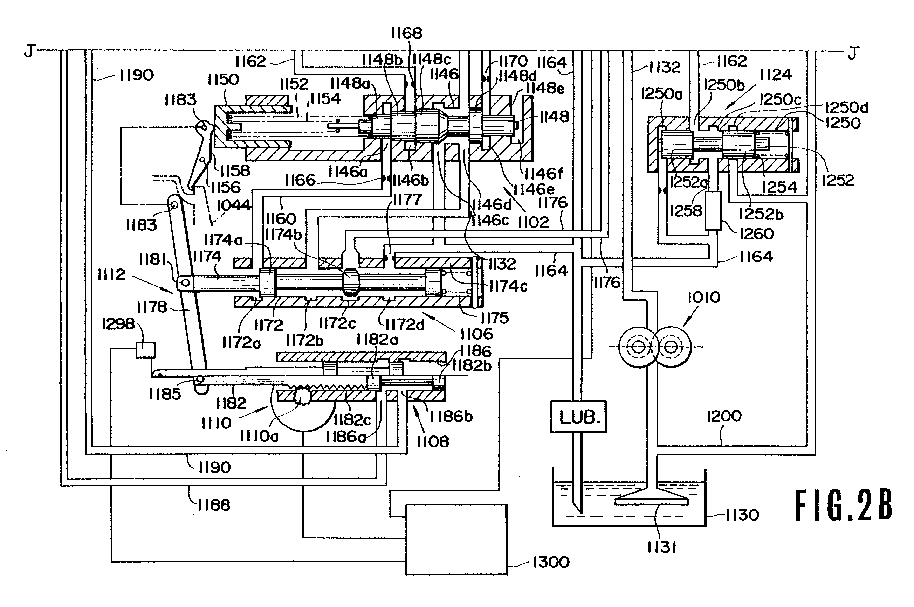

Referring to Figures 1, 2A and 2B, an embodiment of the whole transmission including a continuously variable V-belt transmission according to the present invention is illustrated. This embodiment is described in EP—A—93 413, published 9.11.1983, see there Figures 24, 25A and 25B. That portion of the disclosure of EP—A—93413 which relates to Figures 24, 25A and 25B is hereby incorporated by reference in its entirety. Referring to Figures 2A and 2B, a stepper motor 1110 and a force motor 1224 are controlled by an electronic control unit 1300.

Hereinafter, the operation of the line pressure regulator valve 1102 shown in Figure 2B is described in detail.

Before entering into the description of the operation of the line pressure regulator valve 1102, a consideration is made regarding the minimum oil pressure P1 required by the cylinder chamber 1042 of the drive pulley 1006 and the minimum oil pressure required P2 required by the cylinder chamber 1056 of the driven pulley 1051 (see Figure 1).

The minimum oil pressures P1 and P2 can be expressed by the following equations:

$$P1 = Q1/S1$$

$$P2 = Q2/S2$$

where:

P: Required oil pressure by pulley cylinder chamber

Q: Bias force by pulley

S: Effective pressure acting area of pulley cylinder

(In the above equation suffix 1 denotes a drive pulley side, while suffix 2 denotes a driven pulley side.)

The Q1 and Q2 will take the minimum values as expressed by the following equations which are high enough for preventing slip of the V-belt.

$$Q2 = (TE \cdot COS\theta)/(2\mu \cdot r1)$$

$$Q1 = \frac{\phi1}{\phi2} \cdot Q2 + \frac{\phi1 \cdot TE}{2r1 \cdot \tan(\theta + \rho n)}$$

$$(1 - \frac{1}{2} \{ \frac{\tanh(\lambda \cdot r1 \cdot \phi1)}{\lambda \cdot r1 \cdot \phi1}$$

$$+ \frac{\tanh(\lambda \cdot r2 \cdot \phi2)}{\lambda \cdot r2 \cdot \phi2} \})$$

where:

TE: Engine output torque

θ: Pulley groove angle

μ: Friction coefficient between V-belt and pulley

r: Running radius of V-belt

φ: Contacting angle of V-belt with pulley groove

ρn: Friction angle of frictional power transmission portion

λ: Shift characteristic value of V-belt.

If the P1 and P2 are calculated by putting certain appropriate values into the above equations (in this embodiment S2/S1=1/2), the result can be illustrated as shown by the two broken line curves in Figure 3. As will be understood from Figure 3, the curve P1 intersects with the curve P2 at a reduction ratio near one (1). Ideally, the line pressure should be slightly higher than the higher one of the two oil pressures P1 and P2 as shown by the broken line in Figure 3.

Now, why the above mentioned ideal line pressure characteristic is obtained by the line pressure regulator valve 1102 is explained.

The line pressure generated by the line pressure regulator valve 1102 balances with the sum of the force with which the helical compression springs 1152 and 1154 bias the spool 1148 or pressure regulating element and the force derived from the throttle pressure (from line 1162) in the port 1146b. The springs 1152 and 1154 act between the spool 1148 and the sleeve 1150 acted upon by the lever 1158. The lever 1158 has one end engaged with the sleeve 1150 and the other end engaged by the axially movable conical disc 1044 of the drive pulley 1006. The lever 1158 and the sleeve 1150 move toward the spool 1148 to decrease the length of springs 1152 and 1154 as the movable conical disc 1044 is moved to the left as viewed in Figure 1 toward the largest reduction ratio. Thus, the length of the springs 1152 and 1154 is decreased as the reduction ratio increases or becomes large.

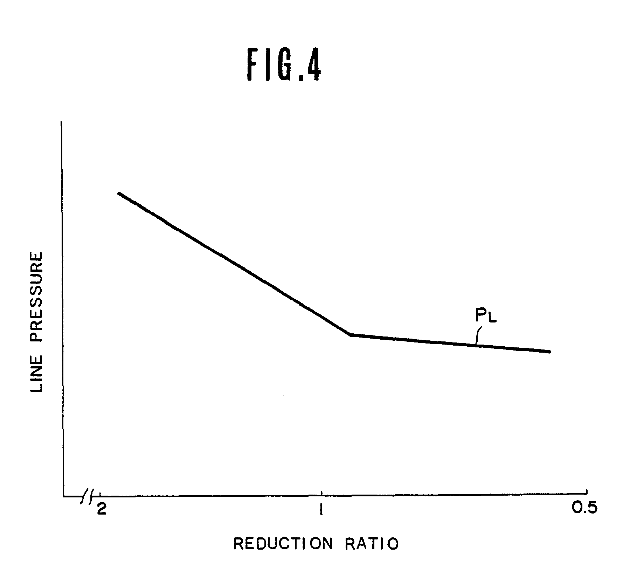

When the reduction ratio is relatively small, the movable conical disc 1044 is displaced to the right as viewed in Figure 2B to displace the lever 1158 counterclockwise, and thus the sleeve 1150 is displaced to the left as viewed in Figure 2B. Under this condition, the spring 1154, which has a short free length as compared to the other spring 1152, is not compressed. Since under this condition the other spring 1152 acts on the spool 148 alone, the bias force applied to the spool 1148 alone, the bias force applied to the spool 1148 under this condition is very small. Therefore, a rate of variation in the line pressure for a variation in the displacement of the sleeve 1150 (i.e., a change in reduction ratio) is small, too. However, the spring 1154 begins to be compressed after the sleeve 1150 has displaced to the left, as viewed in Figure 2, beyond a predetermined length. The bias force under this condition is derived not only by the spring 1152 but also by the spring 1154. Thus, the bias force applied to the spool 1148 becomes great, and a rate of variation in the line pressure for a variation in the displacement of the sleeve 1150 increases. The characteristic of variation in the just described line pressure is illustrated by fully drawn bent line in Figure 4 wherein the variation in the line pressure is illustrated versus a variation in the reduction ratio. That is, the variation in the line pressure is illustrated by the line as shown in Figure 4 which is bent at one point. The gradient of the line on the smaller reduction ratio side is gradual, while that on the larger reduction ratio side is steep.

By selecting the length of the spring 1154 and the spring rate of each of the springs 1152 and 1154, the desired inflection point of the lines and their desired gradients are obtained. Therefore, the line pressure is given which takes or approximates to a sufficiently degree the minimum value required.

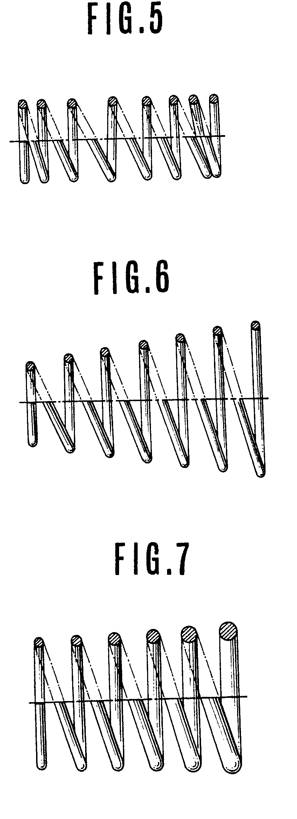

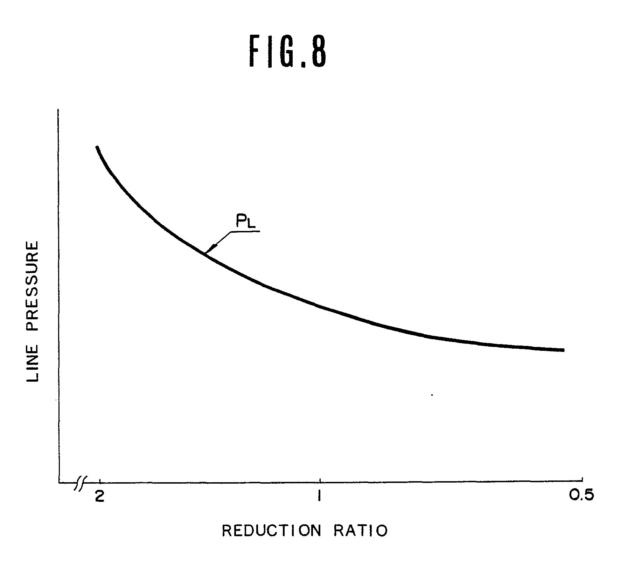

Although, in the above embodiment, a plurality (two) of helical compression springs are used, they may be replaced with a non-uniform pitch helical compression spring as shown in Figure 5, or a non-uniform coil diameter helical compression spring as shown in Figure 6, or a non-uniform diameter helical compression spring as shown in Figure 7. If one of the springs shown in Figures 5, 6 and 7 is used in the place of the two springs 1152, 1154, the non-liner line pressure characteristic as shown in Figure 8 is obtained.

## Claims

1. An hydraulic control system for continuously variable V-belt transmission, having a drive pulley, a driven pulley and a V-belt running over the drive and driven pulleys, including a line pressure regulator valve means (1102) for generating a line pressure, said valve means (1102) comprising a pressure regulating spool (1148), a member (1150) movable relative to said spool (1148) in response to a reduction ratio between the drive and driven pulleys, a biasing spring means (1152, 1154) acting between said spool (1148) and said member (1150) so as to apply biasing spring force to said spool (1148) in response to the displacement of said movable member (1150), said movable member being engaged with a reduction ratio indicative pivotable lever (1158), operatively attached to an axially movable portion of the variable transmission, characterised in that

said spring means (1152, 1154) has non-linear spring characteristics exerting progressively increasing spring force to the spool (1148) when said spring means (1152, 1154) is compressed by a slidable sleeve (1150) forming said movable member which retains the one end of said spring means (1152, 1154),

said spool (1148) being movable at least in response to said spring force and a throttle pressure responsive oil pressure (from line 1162) in the one direction and the line pressure (from line 1132) in that opposite direction thereof, effecting line pressure regulation such that line pressure progressively increases with the increase in reduction ratio of said variable transmission.

2. A hydraulic control system as claimed in claim 1, wherein said spring means comprises a plurality of helical compression springs having different free lengths.

3. A hydraulic control system as claimed in claim 1, wherein said spring means is in the form of a non-uniform pitch helical compression spring.

4. A hydraulic control system as claimed in claim 1, wherein said spring means is in the form of a non-uniform coil diameter helical compression spring.

5. A hydraulic control system as claimed in claim 1, wherein said spring means is in the form of a non-uniform wire diameter helical compression spring.

## Patentansprüche

1. Hydraulisches Steuersystem für ein stufenlos regelbares Keilriemengetriebe, mit einer Antriebsriemenscheibe, einer angetriebenen Riemenscheibe und einem Keilriemen, der über die Antriebsriemenscheibe und die angetriebene Riemenscheibe läuft, mit einer Steuerdruck-Einstellventileinrichtung (1102) zur Erzeugung eines Leitungsdruckes, wobei die Ventileinrichtung (1102) einen Druckregulierschieber (1148), ein Teil (1150), das relativ zu dem Ventilschieber (1148) in Abhängigkeit von einem Untersetzungsverhältnis zwischen der antreibenden und der angetriebenen Riemenscheibe bewegbar ist, sowie eine Federbelastungseinrichtung (1152, 1154) aufweist, die zwischen dem Ventilschieber (1148) und dem Teil (1150) angeordnet ist, um eine Federvorspannkraft auf den Ventillschieber (1148) in Abhängigkeit von einer Verschiebung des beweglichen Teiles (1150) auszuüben, wobei das bewegliche Teil mit einem Schwenkhebel (1158), der das Untersetzungsverhältnis anzeigt, im Eingriff ist, der seinerseits betrieblich mit einem axial beweglichen Teil des regelbaren Getriebes verbunden ist, dadurch gekennzeichnet, daß die Federeinrichtung (1152, 1154) eine nicht-lineare Federcharakteristik aufweist und eine progressiv ansteigende Federkraft auf den Ventilschieber (1148) ausübt, wenn die Federeinrichtung (1152, 1154) durch eine gleitbare Hülse (1150), die das bewegliche Teil, das das eine Ende der Federeinrichtung (1152, 1154) abstützt, zusammengedrückt wird, wobei der Ventilschieber (1148) zumindest in Abhängigkeit von der Federkraft und einem vom Drosseldruck abhängigen Öldruck (von der Leitung 1162) in der einen Richtung und vom Leitungsdruck (von der Leitung 1132) in die entgegengesetzte Richtung verschiebbar ist, wobei er eine Leitungsdruckregulierung derart ausführt, daß der Leitungsdruck progressiv mit der Zunahme des Untersetzungsverhältnisses des regelbaren Getriebes anwächst.

2. Hydraulisches Steuersystem nach Anspruch 1, worin die Federeinrichtung eine Mehrzahl von Schraubendruckfedern, die eine unterschiedliche freie Länge besitzen, aufweist.

3. Hydraulisches Steuersystem nach Anspruch 1, worin die Federeinrichtung in Form einer Schraubendruckfeder mit nicht gleichmäßiger Steigung ausgebildet ist.

4. Hydraulisches Steuersystem nach Anspruch 1, worin die Federeinrichtung in Form einer Schraubendruckfeder mit nicht gleichmäßigem Windungsdurchmesser ausgeführt ist.

5. Hydraulisches Steuersystem nach Anspruch 1, worin die Federeinrichtung in Form einer Schraubendruckfeder mit nicht gleichmäßigem Drahtdurchmesser ausgeführt ist.

## Revendications

1. Système de commande hydraulique pour un variateur continu des vitesses à courroie en "V", ayant une poulie d'entraînement, une poulie menée et une courroie en "V" passant sur les poulies d'entraînement et menée, comprenant un moyen formant soupape régulatrice de pression de ligne (1102) pour produire une pression de ligne, ledit moyen formant soupape (1102) comprenant un corps régulateur de pression (1148), un organe (1150) mobile relativement audit corps (1148) en réponse à un rapport de réduction entre les poulies d'entraînement et menée, un moyen formant ressort de sollicitation (1152, 1154) agissant entre ledit corps (1148) et ledit organe (1150) afin d'appliquer une force de sollicitation de ressort audit corps (1148) en réponse au déplacement dudit organe mobile (1150), ledit organe mobile étant en engagement avec un levier pivotant (1158) indiquant le rapport de réduction activement fixé à une partie axialement mobile du variateur de vitesse,

caractérisé en ce que ledit moyen formant ressort (1152, 1154) a des caractéristiques non linéaires de ressort exerçant une force progressivement croissante de ressort sur le corps (1148) lorsque ledit moyen formant ressort (1152, 1154) est comprimé par un manchon coulissant (1150) formant ledit organe mobile qui retient la première extrémité dudit moyen formant ressort (1152, 1154), ledit corps (1148) étant mobile au moins en réponse à ladite force du ressort et à une pression d'huile (de la ligne 1162) répondant à une pression d'étranglement dans une direction et à la pression de ligne (de la ligne 1132) en direction opposée, pour effectuer une régulation de la pression de ligne de manière que la pression de ligne augmente progressivement avec l'augmentation du rapport de réduction du variateur.

2. Système de commande hydraulique selon la revendication 1 où ledit moyen formant ressort comprend un certain nombre de ressorts hélicoïdaux de compression ayant des longueurs libres différentes.

3. Système de commande hydraulique selon la revendication 1 où ledit moyen formant ressort a la forme d'un ressort hélicoïdal de compression à pas non uniforme.

4. Système de commande hydraulique selon la revendication 1 où ledit moyen formant ressort a la forme d'un ressort hélicoïdal de compression à diamètre d'enroulement non uniforme.

5. Système de commande hydraulique selon la revendication 1 où ledit moyen formant ressort a la forme d'un ressort hélicoïdal de compression à diamètre de fil non uniforme.

# FIG. 1

FIG.2 A

FIG.2B

FIG.3

0 107 194

4

# FIG.4

# FIG.5

# FIG.6

# FIG.7

# FIG.8